# EUROPEAN PATENT SPECIFICATION

(11) **EP 1 046 812 B1**
(45) Date of publication and mention of the grant of the patent: **29.09.2004**
(21) Application number: 99107762.9
(22) Date of filing: 19.04.1999
(51) Int. Cl.: F02N 11/04, H02K 21/04, H02P 9/08

(54) **Starter generator**
Anlasser/Lichtmaschinenkombination
Moto-générateur

(43) Date of publication of application: 25.10.2000
(73) Proprietor: Mitsuba Corporation, Kiryu-shi, Gunma 376-8555 (JP)
(72) Inventor: Uchiyama, Hidekazu, c/o Mitsuba Corporation, Kiryu-shi, Gunma (JP); Nozue, Yutaka, c/o Mitsuba Corporation, Kiryu-shi, Gunma (JP); Watanabe, Hitoshi, c/o Mitsuba Corporation, Kiryu-shi, Gunma (JP); Nagao, Hiromi, c/o Mitsuba Corporation, Kiryu-shi, Gunma (JP)
(74) Representative: Prato, Roberto

(56) References cited:
- DE-C- 4 139 843
- US-A- 4 754 154
- US-A- 4 918 323
- US-A- 5 502 368

## Description

### BACKGROUND OF THE INVENTION

### 1. Field of the Invention

This invention relates to a starter generator that can serve as a starter and a generator for use with an engine of a small-sized motor bicycle or with a general-purpose engine, and more particularly relates to a starter generator to be directly coupled to an engine without reduction gears.

### 2. Related Art Statement

Generally, various small engines such as those of motor bicycles and those of portable generators are independently provided with a starter motor for starting the engine and a generator to be driven by the engine. However, while a motor and a generator have much in common with each other in terms of basic configuration, the starter motor is used only for starting the engine and the magneto generator is used after the start of the engine. Therefore, developments have been done in the field of portable generators for starter generator machines (sel-motor dynamos) that can serve both as a starter and a generator in which the rotor and the stator of the generator are also made to serve as the field device and the armature of the starter motor.

As a starter generator, an outer rotor type starter generator is widely known in which a rotor having permanent magnets (hereinafter referred to simply as magnets) are arranged outside the stator. A small bicycle and a portable generator or the like typically employs a magneto generator. In such arrangement, the rotor is coupled to the crankshaft of the engine and adapted to rotate outside the stator around which a power generating winding is wound, so that when the rotor is rotated, power is generated.

When such a starter generator is used as starter motor, rotational force is generated by interaction between the magnetic field produced by supplying electric power to the starter winding from the power unit and the magnetic field produced by the magnets of the rotor, with the result that a crankshaft is driven to rotate and the engine is started. When, on the other hand, the starter generator is used as magneto generator after the engine has been started, the magnetic flux exerted from the magnets of the rotor affects on the generator winding to generate electro motive force.

However, when the rotor is directly coupled to the engine and the starter generator is made to serve as not only a starter motor but also a generator, such arrangement will accompany the following difficulties under condition that the arrangement has a chance to be applied to a motor bicycle. That is, when the current starter motor for use with a motor bicycle is arranged to have a total reduction ration of 20 to 30 relative to the crankshaft of the engine, while the generator is directly coupled to the engine when it is driven to operate. Therefore, when a starter generator adapted to operate both as starter and as generator is applied to a motor bicycle and directly coupled to the engine like an ordinary generator, a serious unbalance between the body size required for a starter motor and a body size required as a generator.

The torque of a motor is basically proportional to the body size (≒ weight) of the motor and therefore a starter generator operating as starter motor with a reduction ratio of 20 will weigh as much as 60kg if it is used to produce the level of torque that can be achieved by an ordinary motor that weighs 0.3 kg by coupling it directly (with a reduction ratio of 1) to the engine. Note that, when it is used as generator, it would be required to weigh only 1kg like any other ordinary generators for its expected level of power generation and a generator weighing as heavy as 6kg will generate six (6) times as much power as actually required so that any excessive power will simply have to be wasted.

Table 1 below shows the results of an experiment on the unbalance of known starter generator machines. In Table 1, "power generation" refers to the maximum value obtained by using the winding of the starter motor. As seen from Table 1, when a starter generator is designed to produce an output required for the starter, the output of the generator (charger) will be more than ten (10) times higher than the required condition.

**Table 1**

| | Required output | actual output |
|---|---|---|
| Starter | lock torque: 1kgf · m | lock torque: 1kgf · m |
| Generator | lighting output: 80W Charging output: 70W | lighting output: 80W charging output: 800W |

As seen from the above table, when a starter generator having a body size satisfactory for a starter is employed for a generator, there is taken place a large unbalance between the amount of magnetic flux necessary for a motor and that of magnetic flux necessary for a generator, which fact leads to excessive generator output. In addition, some countermeasure should be taken to deal with the excessive power, which leads to increase of the engine friction resulting from the power loss, with the result that the output of the engine is lowered and fuel consumption rate is deteriorated. In this case, there are in general two types of methods for dealing with the excessive output: a short-circuiting type regulator system in which a generator coil is short-circuited and an open type regulator system in which the coil is released. However, the former can give rise to a copper loss, whereas the latter can be a cause of an iron loss so that either of them cannot help yielding a significant loss in handling the excessive output.

In this case, if a field coil is employed to generate only required amount of magnetic flux, such as in the alternator, the problem of excessive output can be avoided. In the arrangement of the alternator, field current is variably changed to control the motor characteristic and the amount of power generation. With this arrangement, the performance and the rate of power generation of the motor are controlled to achieve appropriate balance. However, a starter generator designed for a motor bicycle is requested to cope with the problem of "kick start", which will not be arranged for a four-wheeled motor vehicle, and hence the arrangement is not easily applied to the motor bicycle. A similar problem can arise in portable generators employing a general-purpose engine and also in engines having a recoil starter to be manually started by means of a rope starter device.

In other words, in small motor bicycles, the battery is not necessarily maintained in a good condition and the engine starting system should be designed under consideration that a battery-off condition can be taken place in the motor bicycle. For this reason, the motor bicycle is required to be started by means of a kick action or a press-and-hook action to start the engine thereof even if the battery is dead or the terminal has been pulled off from the battery. Therefore, the circumstances under which the starter generator of the engine of a motor bicycle is expected to operate are totally different from those of a four-wheeled motor vehicle where the electric equipment is designed basically on the assumption that the battery usually operates properly.

Under these circumstances, a magnet-type generator adapted to use magnets for providing a magnetic field is popularly employed for the generator of a motor bicycle, with the result that once the crankshaft is driven to rotate by a kick or some other appropriate action, power generation can be carried out. Thus, engine can be ignited and started by a kick or some other appropriate action regardless of the condition of the battery. In other words, a field coil type starter generator cannot be applied to a motor bicycle and the above described problem of unbalance has been left unsolved. A similar problem exists in various machines comprising an engine to be started by means of a rope starter because a magnet-type generator is also employed.

US-A-4 754 154 discloses an electric generator for vehicles having starting coils and generating coils. Moreover, the generator includes a field element for providing a magnetic feld which interacts with the magnetic field of the starting coil during the start-up sequence of the engine of the vehicle. The field element also generate a magnetic field after the start-up sequence has been completed to induce an electric current in the generating coils during operation of the engine, so as to provide electrical energy for the engine.

### SUMMARY OF THE INVENTION

Therefore, an object of the present invention is to provide a starter generator that can be started by a kick or some other appropriate action but is free from the problem of excessive output.

According to the present invention, there is provided a starter generator including a stator around which armature coil is wound and a rotor directly coupled to a crankshaft of an engine and provided at the outer side or inner side of the stator so as to be rotatable relative to the stator, the starter generator being adapted to selectively function as a motor upon starting the engine and also as a generator after the engine has been started, the starter generator characterized by comprising a field device arranged on the rotor, which includes a plurality of permanent magnets magnetized in the same manner in terms of polarity and a plurality of controllable magnets made of a magnetic material, the controllable magnets being arranged respectively between the permanent magnets, a field coil forming a closed magnetic circuit through the controllable magnets, and effective magnetic flux control means for controlling the flow of electric current flowing through the field coil to vary the magnetic flux generated from the field coil, whereby the effective magnetic flux exerted between the rotor and the stator is controlled depending on the selected function.

With the above arrangement, the effective magnetic flux exerted between the stator and the rotor is changed depending on the role to be played by the starter generator. Thus, it is possible to adjust the unbalance of the motor output and the generator output. Accordingly, a generator having a rotor which is designed to be coupled directly to an engine can be operated efficiently as a starter motor, and hence there can be provided a starter generator for use with a motor bicycle or a general purpose engine which are possibly started by a kick or a rope.

In this case, the effective magnetic flux control means may be arranged to energize the field coil so as to increase the effective magnetic flux upon starting the engine and de-energize the field coil after the engine has been started.

Further, the effective magnetic flux control means can be arranged to energize the field coil so as to increase the effective magnetic flux upon starting the engine and energize the same to the field coil so as to decrease the effective magnetic flux after the engine has been started.

Furthermore, the effective magnetic flux control means may be arranged to energize the field coil so as to increase the effective magnetic flux upon starting the engine and energize the same to the field coil so as to adjust the effective magnetic flux depending on the rotation rate of the engine after the engine has been started. In this case, after the engine has been started, the effective magnetic flux control means may be arranged to control the amount of electric current supplied to the field coil so that as the rate of revolution of the engine increase, the amount of effective magnetic flux is decreased.

Further, an arrangement may be made such that the rotor is provided to be rotatable outside the stator, a boss portion formed at a part of the rotor is inserted into a central part of the stator along the axis of rotation, the boss portion is provided with a magnet to be detected, and a Hall element is provided on the stator at a position facing the magnet to be detected.

In this case, an arrangement may be made such that the rotor is coupled to the crankshaft of the engine by means of the boss portion, the stator is attached to a bracket case fitted to the case of the engine and an end bracket having the Hall element thereon is further fitted to the bracket case. Additionally, the magnet to be detected may be arranged on the boss portion through a spacer of a non-magnetic material.

Further, an arrangement may be made such that the field coil wound around a coil bobbin is provided at one end face of the stator, the stator is provided with a feeding through hole bored in the axial direction, an insulating holder having a terminal member inserted therethrough is inserted into the feeding through hole, whereby the terminal member is electrically connected at its one end with the field coil and also electrically connected at its other end with an electric wire for feeding electric current to the field coil. In this case, a mating terminal member connected with an electric wire for feeding electric current to the field coil may be coupled to the terminal member within the feeding through hole.

Furthermore, an arrangement may be made such that the stator is provided with a clamp member insertion hole extending in the axial direction, and the field coil provided at one end of the stator and the bracket case provided at the other end of the stator are coupled to each other so as to sandwich the stator by means of a coupling member which is inserted into the coupling member insertion hole. In this case, the field coil wound around a coil bobbin may be provided at the end face of the stator and a nut portion provided at the coil bobbin is screwed with a clamp member which is inserted into the clamp member insertion hole from the outside of the bracket case.

In addition, the starter generator may be arranged to be one for use in a motor bicycle which is possibly started by kick, and also arranged to be a starter generator for use with a general purpose engine which is possibly started by using a rope.

The above-described objects and other objects, and novel feature of the present invention will become apparent more fully from the description of the following description in conjunction with the accompanying drawings.

### BRIEF DESCRIPTION OF THE DRAWINGS

FIG. 1 is a cross sectional view of a principal portion of an embodiment of starter generator to be used for a motor bicycle according to the invention; and
FIG. 2 is a schematic illustration of the embodiment of starter generator of FIG. 1, in which the positional relationship between the rotor and the stator is shown.

### DESCRIPTION OF THE PREFERRED EMBODIMENT

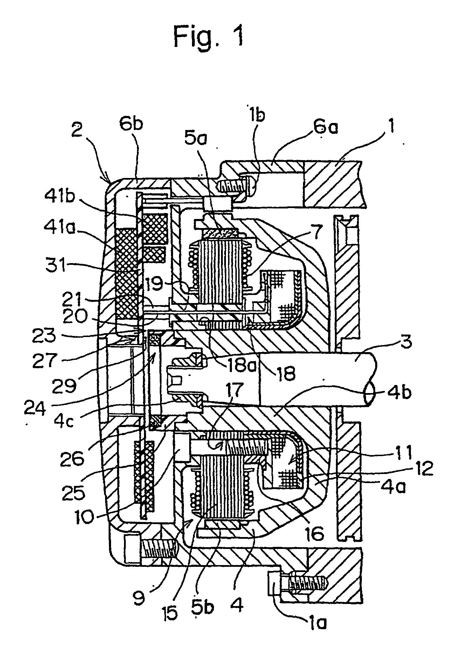

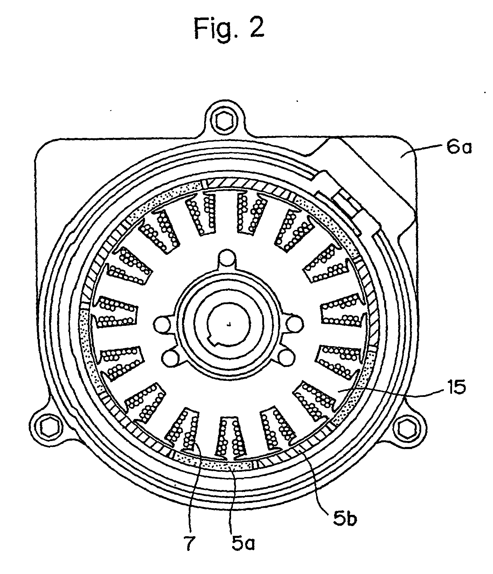

Now, an embodiment of the present invention will hereinafter be described with reference to the accompanying drawings. FIG. 1 is a schematic cross-portional view of a main portion of an embodiment of a starter generator for use in a motor bicycle according to the present invention and FIG. 2 is a schematic illustration of the embodiment of starter generator of FIG. 1 in which there is shown the positional relationship between the rotor and the stator.

The embodiment of starter generator of FIG. 1, integrally coupled to an engine, is arranged to serve as engine starter as well as generator for use in a motor bicycle. The starter generator serves as starter motor when the engine is to be started and as generator after the engine has been started.

The generator 2 is fitted into an engine case 1 in a manner shown in FIG. 1. The rotor 4 of the generator 2 is integrally fitted to the end of the crankshaft 3 of the engine projecting to the outside of the engine case 1. The rotor 4 has a bottomed short cylindrical yoke 4a made of a magnetic material such as iron and a cylindrical boss portion 4b arranged coaxially and integrally with the yoke 4a and extending along the axis of rotation of the rotor 4 from the inner surface of the bottom wall of the yoke 4a. The boss portion 4b is coupled to the crankshaft 3 along the tapered outer periphery thereof by means of screw/nut engagement using a nut 4c. A plurality of magnets 5a operating as members of the field device of the rotor 4 and also a plurality of control magnetic poles 5b made of a magnetic materials are spaced round the inner circumference of the cylindrical wall of the yoke 4a. The inertia mass of the rotor 4 as a whole is so designed as to make the rotor 4 satisfactorily operates as flywheel of the engine.

Note that the number of magnets to be provided on the rotor 4 becomes half the number of magnets when magnets are exclusively arranged on the entire circumference. Therefore, if the field current is adjusted, the load to be applied when a kick start of a kick type motor bicycle is started or when a general purpose engine is to be stared will become small as compared with when the start operation is carried out on a conventional starter generator.

The generator 2 operating also as an electric motor is accommodated within a bracket case 6a which is attached to cover the crankshaft 3 from the outside of the engine case 1 and fixed to the engine case 1 by means of a bolt 1a. An end bracket 6b is attached to the bracket case 6a from the outside by means of a bolt 1b. The stator 9 of the generator 2 is wound with an armature coil 7 that can serve as a starter winding and generator winding. The overall arrangement is substantially a doughnut-shaped profile. The stator 9 is accommodated within the bracket case 6a so as to be coaxial with the rotor 4 and fixed to the bracket case 6a by means of a bolt (fixing member) 10.

The rotor 4 has a boss portion 4b and the boss portion 4b is arranged on the inner peripheral surface of the stator 9, so that the stator 9 is brought close to the outer peripheral surface of the boss portion 4b. Further, the outer peripheral surface of the stator 9 is also brought close to the inner surfaces of the magnets 5a and the controllable magnetic poles 5b of the rotor 4. That is, when the rotor 4 is inserted at its boss portion 4b into the central part of the stator 9 and driven by the engine by means of the crankshaft, the magnets 5a and the controllable magnetic poles 5b arranged on the inner periphery of the yoke 4a are driven to rotate around the stator 9.

The stator 9 is provided with a field coil 11 at the end face thereof so that the field coil 11 faces the bottom wall of the yoke 4a. When electric current is supplied to the field coil 11, there is formed a closed magnetic circuit including the controllable magnetic poles 5b, so that these control magnetic poles 5b are magnetically energized. With the above arrangement, since the control magnetic poles 5b have a magnetic resistance smaller than that of the magnets 5a and hence the control magnetic poles 5b have a magnetic permeability lower than that of the magnets 5a, the magnetic flux generated by the field coil 11 tends to be concentrated to the controllable magnetic pole 5b. Thus, if the amount or direction of electric current flowing through the field coil 11 is varied, the amount of magnetic flux and its direction generated at the controllable magnetic poles 5b are varied. Therefore, the intensity and the direction of the magnetic pole of the control magnetic poles 5b can be varied correspondingly. Accordingly, the condition of the magnetic unit can be varied with the magnets 5a that are permanent magnets and the control magnetic pole 5b, and hence it is possible to appropriately control the amount of the effective magnetic flux exerted between the rotor 4 and the stator 9.

The field coil 11 is wound around a coil bobbin 12, and the coil bobbin 12 is fixed to the stator 9 by means of a bolt 10. The stator core 15 of the stator 9 is provided with a plurality of bolt insertion through holes (fixing member insertion holes) 17 spaced round a circumference at interval so that the bolt insertion holes extend in the axial direction. On the other hand, the coil bobbin 12 of the field coil 11 is provided at the left end face thereof in FIG. 1 with a plurality of nut portions 16 so as to correspond to the respective bolt insertion through holes 17. When bolts 10 are inserted into the respective bolt insertion through holes 17 from the outside of the bracket case 6a and held in engagement with the respective nut portions 16, the field coil 11 is fixed to the bracket case 6a together with the stator 9.

If the arrangement is made so that the armature coil 7 and the field coil 11 are provided on the stator 9, it is to say that the arrangement includes a number of components and a number of steps for assemblage will inevitably be required. Further, since the rotor 4 is arranged to rotate outside the stator 9, if the armature coil 7 is provided inside the rotor 4, the whole arrangement also tends to become large.

For this reason, according to the above described embodiment of starter generator, in order to reduce the number of components of the apparatus and the number of steps for assemblage, the stator 9 is provided with axial bolt insertion through holes 17. Then, the field coil 11 and the bracket case 6a arranged on an end face of the stator 9 are fixed together by means of a bolt (fixing member) 10 which is inserted into the bolt insertion through hole 17, whereby the stator 9 is sandwiched therebetween. Thus, the field coil 11 and the stator 9 can be fixed together to the bracket case 6a. In this way, the number of components of the apparatus and the number of steps for assemblage can be reduced. Therefore, the space required for fixing them together can be reduced as compared with an arrangement where the field coil 11 and the stator 9 are clamped together and the stator 9 is fixed to the bracket case 6a in a subsequent step. Thus, the apparatus can be made to be compact and light in weight, correspondingly.

Additionally, in the above embodiment, the field coil 11 is wound around the coil bobbin 12 and then the assemblage is arranged on an end face of the stator 9. Then, the bolts 10 are inserted into the respective bolt insertion through holes 17 from the outside of the bracket case 6a and screwed into the respective nut portions 16. Thus, the field coil 11, the stator 9 and the bracket case 6a can be fixed together simultaneously, and moreover, this work can be achieved by access from the outside. Therefore, the assembling process will be remarkably improved.

The coil bobbin 12 of the field coil 11 is provided in part thereof with a feeding portion 18. The feeding portion 18 comprises a rod-shaped holder 19 made of an electrically insulating resin material and a male terminal member 20 to be electrically connected to the field coil 11. The male terminal member 20 is inserted into the holder 19 extending in the axial direction thereof and held therein. More specifically, when the holder 19 is inserted into the feeding portion through hole 18a bored through the stator 15, the male terminal member 20 is led to the end face of the stator 9 at the side of the bracket case 6b. At the side of the stator 9 where the male terminal portion 29 is led, the male terminal member 20 is electrically connected to a female terminal member 21, which female terminal member 21 is by turn electrically connected to a field coil control unit 41a which is an effective magnetic flux density control means.

Thus, the flow rate of electric current through the field coil 11 by way of the terminal members 20, 21 is controlled by the field coil control unit 41a. The amount of magnetic flux generated by the field coil 11 is changed by controlling the flow rate of electric current through the field coil 11, whereby the state of magnetic excitation of the controllable magnetic poles 5b is changed and the amount of effective magnetic flux exerted between the rotor 4 and the stator 9 can be controlled.

When assembling the feeding portion 18, firstly the coil bobbin 12 of the field coil 11 and the stator core 15 of the stator 9 are fixed to the bracket case 6a. Then, the coil bobbin 12 and the stator core 15 are arranged inside the yoke 4a and the bracket case 6a is attached to the engine case 1. In this way, the field coil 11 and the stator 9 are fixed to the engine case 1 together with the bracket case 6a.

If the field coil 11 is arranged at the end face of the stator 9 located at the side of the engine case 1 of the starter generator, then the resulting arrangement is that the connecting portion of the field coil 11 is led to the other side of the stator 9. Such arrangement is a complex wiring arrangement requiring cumbersome wiring operation. Since the field coil 11 is located at the side of the stator 9 where the armature coil 7 is also arranged, it may be with some difficulty to lead the terminal end of the armature coil 7 to the side of the field coil 11. Consequently, one possible arrangement is such that terminal ends of the armature coil 7 and the field coil 11 are led out in opposite directions and connected to each other inside the assembly. However, such arrangement requires a large space for the wiring and it becomes difficult to lead the two terminal ends to the outside of the apparatus at the same place.

In view of this, in the above described embodiment of starter generator according to the invention, in order to simplify the wiring arrangement for the terminal end of the stator winding and that of the field coil, the stator 9 is provided with a feeding through hole 18a extending in the axial direction so that the field coil 11 wound around the coil bobbin 12 can be easily provided on an end face of the stator 9. Then, a holder 19 with an insulating property having a male terminal member 20 inserted therethrough is inserted into the feeding through hole 18a. The male terminal member 20 is electrically connected at an end thereof to the field coil 11 and at the other end thereof to the electric wire for feeding electric current to the field coil 11. With this arrangement, the electric terminal of the field coil 11 is drawn out to the end face of the stator 9 opposite to the side of the field coil 11 and the electric connection of the field coil 11 can be realized at the side of the bracket case 6b. As a result, both the electric connection of the field coil 11 and that of the armature coil can be arranged at the side of a same end face of the stator 9.

Alternatively, a mating terminal member to which the male terminal member 20 and the electric wire for feeding electric current to the field coil 11 is connected, may be connected to the male terminal member 20 at the feeding through hole 18a. With this arrangement, the male terminal member 20 on the side of the field coil 11 and the female terminal member on the side of the power supply are connected at the inside of the feeding through hole 18a. Therefore, additional space becomes unnecessary for electrically connecting the field coil 11 and the power supply.

In this embodiment, the armature coil 7 is driven to realize a three-phase brushless electric motor and generator, and the motor and generator is controlled by a semiconductor switch. Therefore, the generator 2 of the embodiment according to the invention incorporates a rotor position detector 23 which is utilized for controlling the ON/OFF operation of the semiconductor switch. The rotor position detector 23 comprises a detecting unit 24 having an object to be detected and a detecting unit 27 for detecting the object. The detecting unit 24 is mounted on the rotor 4, whereas the detecting unit 27 is mounted on the bracket case 6b.

The detecting unit 24 includes a spacer 25 and a magnet to be detected 26, and the spacer 25 is fitted to the end face of the boss portion 4b of the rotor 4 located at the side of the bracket case 6b. The spacer 25 is made of a non-magnetic material and formed into a ring-shape. The spacer 25 is bonded to the end of the boss portion 4b typically by means of an adhesive agent or the like. The magnet to be detected 26 is formed of a ring having a plurality of magnetic poles spaced at an interval round the circumference. The magnet to be detected 26 is then coaxially fitted into the end face of the spacer 25 at the side of the bracket case 6b and rigidly secured by means of an adhesive agent or the like. Alternatively, it may be integrally formed with the spacer by molding.

The detecting unit 27 includes Hall elements 29 and a circuit substrate 31 carrying thereon a motor control circuit 41b containing the electronic parts and the wires of the semiconductor switch and the field coil control unit 41a or the like. Three Hall elements 29 are spaced round the circumference at an end of the circuit substrate 31 at equal phase differences. These components are so arranged that when the end bracket 6b is attached to the bracket case 6a, the Hall elements 29 are brought close to the magnet to be sensed 26 with a predetermined air gap interposed therebetween. Further, the Hall elements 29 are electrically connected to the semiconductor switch by way of lead wires (not shown).

If the Hall elements are utilized for detecting a magnetic field exerted from the magnet provided on the rotor of an outer rotor type, for example, in a manner described in Japanese Patent Application Laid-Open No. 8-266084, the Hall element is disposed near the stator inside the rotor, since the Hall elements tends to pickup noises coming from the electric current flowing through the starter winding and the electric current flowing through the generator winding, there is a fear that the rotary position of the magnet cannot be accurately detected. On the other hand, as described in Japanese Patent Application Laid-Open No. 8-256464, if the Hall elements are arranged outside the rotor, the detection unit including the circuit substrate to which the Hall elements are connected can have an arrangement in which the detecting unit projects outside the rotor. Consequently, the overall dimensions of the portable generator will be increased.

Therefore, in this embodiment of starter generator according to the invention, in order to avoid the apparatus becoming bulky while preventing influence from the electric current flowing in the winding, a portion of the rotor 4 is inserted into a central part of the stator 9 and the magnet to be sensed 26 is arranged on the inserted portion of the rotor 4. Further, the Hall elements 29 are arranged at positions facing the magnet to be sensed 26 provided on the rotor 4. In other words, the magnet to be sensed 26 and the Hall elements 29 constituting the rotor position detector of this embodiment of starter generator are arranged at respective central parts of the rotor 4 and the stator 9. Thus, when detecting the position of the rotor 4, influence from the noises due to the magnetic field of the magnets 5a of the rotor 4 and the electric current flowing through the winding of the stator 9 can be avoided, and hence the position can be detected with more accuracy by the Hall elements.

In the above embodiment of starter generator according to the invention, the rotor 4 is fitted to the crankshaft 3 of the engine at the boss portion 4b, and the magnet to be sensed 26 is arranged on the boss portion 4b. Further, the stator 9 is mounted on the bracket case 6a which is attached to the engine case 1, and the Hall elements 29 are provided on the end bracket 6b secured to the bracket case 6a. Thus, the magnet to be sensed 26 and the Hall elements 29 can be arranged in an opposing fashion with ease. Moreover, it is possible to make more reasonable arrangement in the assembling manner that the magnet to be sensed 26 is attached to the rotor 4 and that the circuit substrate having the Hall elements 29 electrically connected thereto is mounted on the stator 9.

Furthermore, since the magnet to be sensed 26 is mounted on the rotor 4 through a spacer 25 made of a non-magnetic material, the detecting unit can be effectively protected from influence of the magnetic field of the magnet 5a of the rotor 4 and that of the field coil 11.

Now, the action of the above described embodiment will hereinafter be described. When the engine is started by means of the generator 2 which can also serve as an electric motor, the armature coil 7 of the stator 9a is supplied with a voltage having a phase corresponding to that of the drive signal of the brushless motor from the driver which is mounted on the motor control circuit 41b of the starter generator. The rotor 4 is rotationally driven by the interaction between the rotary magnetic field which is formed by supplying electric current to the armature coil 7 and the magnetic field generated from the magnets 5a and the controllable magnetic poles 5b of the armature coil 7. The angular position of the revolving rotor 4 is detected at any instant time in such a manner that the Hall element 29 fixed to the side of the end bracket 6b detects the position of the magnet to be sensed 26 that is secured to the boss portion 4b. The information on the detected rotary position of the rotor 4 is then transmitted to the semiconductor switch of the circuit substrate 31, whereby the driver drives the rotor 4 to revolve continuously with stability.

In this case, the field coil 11 is supplied with electric current in such a manner that the controllable magnetic poles 5b of the rotor 4 is placed in a magnetic condition different from that of the magnets 5a. More specifically, with the arrangement that the N- and S-poles are alternately spaced on the inner circumference of the rotor 4, when the engine is started, the field coil 11 is magnetically energized in such a manner that the effective magnetic flux acting on the armature coil 7 of the stator 9 is increased. In other words, in the above embodiment of starter generator according to the invention, when the crankshaft 3 of the engine coupled to the rotor 4 is to revolve, the motor is supplied with electric current to maximize the effective magnetic flux so that the generated torque is increased. Therefore, the engine can be positively started.

Once the engine is started, the driver automatically halts the transmission of drive signals depending on the detection signal which is generated by the Hall elements 29 in response to the detection of the magnet to be sensed 26. When the engine has been started, the rotor 4 coupled to the crankshaft 3 comes to steady rotation around the stator 9. Then, there is caused a magnetic interlink between a rotary magnetic field generated from the magnets 5a and the controllable magnetic poles 5b of the rotor 4 and the armature coil 7 of the stator 9, with the result that an electromotive force is generated in the armature coil 7. The electromotive force generated in the armature coil 7 is taken out to the outside by the lead wire connected to the armature coil 7 and supplied to some desired load.

After the engine has been started, the driver halts the supply of power to the armature coil 7 and the starter generator changes its role from the motor to the generator. At this time, in the starter generator, the electric current supplied to the magnetic field 11 is varied in its direction and amount, so that the rate of power generation of the starter generator can be appropriately controlled. In other words, if supply of the electric current to the field coil 11 is stopped or the electric current is supplied to the field coil 11 so that the controllable magnetic poles 5b are brought into the same magnetic condition as that of the magnets 5a, then the effective magnetic flux acting on the armature coil 7 can be appropriately changed.

Thus, after the engine has been started, if the field coil 11 is magnetically energized in a direction that the amount of effective magnetic flux is decreased, the rate of power generation can be suppressed, correspondingly. Further, if the flow rate of the electric current flowing in the field coil 11 is varied depending on the rate of revolution of the engine, then the rate of power generation can be optimized. In this case, the magnitude of electric current supplied to the field coil 11 may be so controlled that as the rate of revolution of the engine, the amount of effective magnetic flux is decreased. For example, if the rate of revolution of the engine is low, the supply of power to the field coil 11 will be stopped to reduce the amount of effective magnetic flux to a level lower than when the engine is started. Then, as the rate of revolution of the engine is increased, the field coil 11 is so magnetically energized as to further decrease the amount of effective magnetic flux. Thus, the rate of power generation is suppressed.

As described above, with the above embodiment of starter generator according to the invention, the controllable magnetic poles 5b are appropriately controlled in magnetically energizing state by means of the field coil 11. Therefore, the amount of effective magnetic flux exerted between the stator 9 and the rotor 4 can be changed to "+ → 0 → -". Therefore, even if the starter generator of a starter generator according to the invention is directly coupled to an engine so as to make it serve as a generator, it is possible to eliminate unbalance between the amount of generating torque when the starter generator serves as a motor and the amount of generating power when the starter generator serves as a generator. Further, the starter generator according to the present invention can be applied to any motor bicycles, portable generators or the like which are possibly started by way of kick or started with a rope.

It should be noted that the present invention is not limited to the above described embodiment, and various changes and modifications can be effected without departing from the spirit and the scope of the present invention. For example, while the present invention is described on a case where the starter generator of the present invention is applied to a motor bicycle and a starter generator, the present invention can be applied to any starter generator such as a portable generator or a battery-less chemical diffuser which are powered by a general purpose engine or such as an outer-rotor type fan motor that needs a starter generator having magnets on the rotor side.

Further, while in the above embodiment the armature coil 7 is arranged to serve not only as a starter winding but a generator winding, the starter winding and the generator winding may be separately provided.

As described above, with a starter generator according to the invention, the magnitude of electric current supplied to the field coil, which forms a closed magnetic circuit with the controllable magnetic poles, is controlled, so that the magnetic flux generated by the field coil can be varied. Therefore, it is possible to control the amount of effective magnetic flux exerting between the rotor and the stator depending on the role to be played. In other words, the amount of effective magnetic flux exerting between the stator and the rotor can be appropriately changed depending on the operation modes such as when the starter generator serves as a motor or a generator. Therefore, it is possible to adjust the unbalance between the motor output and the power generation output. Accordingly, even if the starter generator of the present invention is applied to a system in which a rotor is directly connected to an engine, the starter generator can be effectively and efficiently used as both a motor and a generator. Further, it is possible to realize the starter generator that can be applied to any motor bicycles, general-purpose engines or the like which are possibly started by way of kick or with a rope.

Furthermore, in a starter generator according to the invention, the number of magnets composing the field device becomes half as compared with when the field devise is all composed of permanent magnets. Therefore, if the field current is appropriately adjusted, it becomes possible to reduce the load which is imposed upon starting a kick type motor by a kick or the load which is imposed upon starting a general-purpose engine by a rope.

## Claims

1. A starter generator including a stator (9) around which an armature coil (7) is wound and a rotor (4) directly coupled to a crankshaft (3) of an engine and provided at the outer side or inner side of the stator (9) so as to be rotatable relative to the stator (9), the starter generator being adapted to selectively function as a motor upon starting the engine and also as a generator after the engine has been started, the starter generator **characterized by** comprising:
a field device arranged on the rotor (4), including a plurality of permanent magnets (5a) magnetized in the same manner in terms of polarity and a plurality of controllable magnets (5b) made of a magnetic material, the controllable magnets (5b) being arranged respectively between the permanent magnets (5a);
a field coil (11) forming a closed magnetic circuit through the controllable magnets (5b); and
effective magnetic flux control means (41a) for controlling the flow of electric current flowing through the field coil (11) to vary the magnetic flux generated from the field coil (11), whereby the effective magnetic flux exerted between the rotor (4) and the stator (9) is controlled depending on the selected function.

2. A starter generator according to claim 1, **characterized in that** the effective magnetic flux control means (41a) energizes the field coil (11) so as to increase the effective magnetic flux upon starting the engine and de-energizes the field coil (11) after the engine has been started.

3. A starter generator according to claim 1, **characterized in that** the effective magnetic flux control means (41a) energizes the field coil (11) so as to increase the effective magnetic flux upon starting the engine and energizes the same to the field coil (11) so as to decrease the effective magnetic flux after the engine has been started.

4. A starter generator according to claim 1, **characterized in that** the effective magnetic flux control means (41a) energizes the field coil (11) so as to increase the effective magnetic flux upon starting the engine and energizes the same to the field coil (11) so as to adjust the effective magnetic flux depending on the rotation rate of the engine after the engine has been started.

5. A starter generator according to claim 4, **characterized in that** after the engine has been started, the effective magnetic flux control means (41a) controls the amount of electric current supplied to the field coil (11) so that as the rate of revolution of the engine increase, the amount of effective magnetic flux is decreased.

6. A starter generator according to any one of claims 1 through 5, **characterized in that** the rotor (4) is provided to be rotatable outside the stator (9), a boss portion (4b) formed at a part of the rotor (4) is inserted into a central part of the stator (9) on the axis of rotation, the boss portion (4b) is provided with a magnet (26) to be detected, and a Hall element (29) is provided on the stator (9) at a position facing the magnet (26) to be detected.

7. A starter generator according to claim 6, **characterized in that** the rotor (4) is fitted at the boss portion (4b) to the crankshaft (3), the stator (9) is attached to a bracket case fixed to the case of the engine and an end bracket (6b) having the Hall element (29) thereon is further attached to the bracket case (6a).

8. A starter generator according to claim 6 or 7, **characterized in that** the magnet (26) to be detected is arranged on the boss portion (4b) through a spacer (25) made of a non-magnetic material.

9. A starter generator according to any one of claims 1 through 5, **characterized in that** the field coil (11) wound around a coil bobbin (12) is provided at one end face of the stator (9), the stator (9) is provided with a feeding through hole (18a) bored in the axial direction thereof, an insulating holder (19) having a terminal member (20) inserted therethrough is inserted into the feeding through hole (18a), whereby the terminal member (20) is electrically connected at its one end with the field coil (11) and also electrically connected at its other end with an electric wire for feeding electric energy to the field coil (11).

10. A starter generator according to claim 9, **characterized in that** a mating terminal member connected with an electric wire for feeding electric energy to the field coil (11) is coupled to the terminal member (20) within the feeding through hole (18a).

11. A starter generator according to any one of claims 1 through 5, **characterized in that** the stator (9) is provided with a fixing member insertion hole (17) extending in the axial direction thereof, and the field coil (11) provided at one end of the stator (9) and the bracket case (6a) provided at the other end of the stator (9) are coupled to each other so as to sandwich the stator by means of a fixing member (10) which is inserted into the fixing member insertion hole (17).

12. A starter generator according to claim 11, **characterized in that** the field coil (11) wound around a coil bobbin (12) is provided at one end face of the stator (9) and a nut portion (16) provided on the coil bobbin (12) is screwed with a fixing member (10) which is inserted into the fixing member insertion hole (17) from the outside of the bracket case (6a).

13. A starter generator according to any one of claims 1 through 12, **characterized in that** the starter generator is adapted to be employed in a motor bicycle which is possibly started by a kick.

14. A starter generator according to any one of claims 1 through 12, **characterized in that** the starter generator is adapted to be coupled to a general-purpose engine which is possibly started by using a rope.

## Patentansprüche

1. Startergenerator, umfassend einen Stator (9), um den eine Ankerspule (7) gewickelt ist, und einen Rotor (4), der direkt mit einer Kurbelwelle (3) einer Kraftmaschine gekoppelt ist und an der Außenseite oder Innenseite des Stators (9) vorgesehen ist, so dass er in Bezug zum Stator (9) drehbar ist, wobei der Startergenerator angepasst ist, um selektiv als ein Motor beim Starten der Kraftmaschine und auch als ein Generator, nachdem die Kraftmaschine gestartet worden ist, zu wirken, wobei der Startergenerator **dadurch gekennzeichnet ist, dass** er umfasst:
ein Feldgerät, das auf dem Rotor (4) angeordnet ist, umfassend eine Mehrzahl von Permanentmagneten (5a), die hinsichtlich von Polarität auf dieselbe Weise magnetisiert sind, und eine Mehrzahl von steuerbaren Magneten (5b), die aus einem magnetischen Material hergestellt sind, wobei die steuerbaren Magnete (5b) respektive zwischen den Permanentmagneten (5a) angeordnet sind;
eine Feldspule (11), die einen geschlossenen magnetischen Kreis durch die steuerbaren Magnete (5b) bildet; und
eine Effektivmagnetfluss-Steuereinrichtung (41a) zum Steuern des Flusses von elektrischem Strom, der durch die Feldspule (11) fließt, um den magnetischen Fluss zu variieren, der von der Feldspule (11) erzeugt wird, wodurch der effektive magnetische Fluss, der zwischen dem Rotor (4) und dem Stator (9) eine Wirkung ausübt, abhängig von der ausgewählten Funktion gesteuert wird.

2. Startergenerator nach Anspruch 1, **dadurch gekennzeichnet, dass** die Effektivmagnetfluss-Steuereinrichtung (41a) die Feldspule (11) mit Energie beaufschlagt, um den effektiven magnetischen Fluss beim Starten der Kraftmaschine zu erhöhen, und eine Energiebeaufschlagung der Feldspule (11) vermindert, nachdem die Kraftmaschine gestartet worden ist.

3. Startergenerator nach Anspruch 1, **dadurch gekennzeichnet, dass** die Effektivmagnetfluss-Steuereinrichtung (41a) die Feldspule (11) mit Energie beaufschlagt, um den effektiven magnetischen Fluss beim Starten der Kraftmaschine zu erhöhen, und eine Energiebeaufschlagung desselben zur Feldspule (11) vornimmt, um den effektiven magnetischen Fluss, nachdem die Kraftmaschine gestartet worden ist, zu verringern.

4. Startergenerator nach Anspruch 1, **dadurch gekennzeichnet, dass** die Effektivmagnetfluss-Steuereinrichtung (41a) die Feldspule (11) mit Energie beaufschlagt, um den effektiven magnetischen Fluss bei Starten der Kraftmaschine zu erhöhen, und eine Energiebeaufschlagung desselben zur Feldspule (11) vornimmt, um den effektiven magnetischen Fluss abhängig von der Rotationsgeschwindigkeit der Kraftmaschine einzustellen, nachdem die Kraftmaschine gestartet worden ist.

5. Startergenerator nach Anspruch 4, **dadurch gekennzeichnet, dass**, nachdem die Kraftmaschine gestartet worden ist, die Effektivmagnetfluss-Steuereinrichtung (41a) den Betrag an elektrischem Strom steuert, der der Feldspule (11) zugeführt wird, so dass, wenn die Umdrehungsgeschwindigkeit der Kraftmaschine ansteigt, der Betrag an effektivem magnetischem Fluss verringert wird.

6. Startergenerator nach einem der Ansprüche 1 bis 5, **dadurch gekennzeichnet, dass** der Rotor (4) vorgesehen ist, um außerhalb des Stators (9) drehbar zu sein, ein Nabenteil (4b), der an einem Teil des Rotors (4) ausgebildet ist, in einen mittigen Teil des Stators (9) auf der Drehachse eingesetzt ist, der Nabenteil (4b) mit einem zu detektierenden Magneten (26) versehen ist und ein Hall-Element (29) auf dem Stator (9) an einer Position gegenüberliegend dem zu detektierenden Magneten (26) vorgesehen ist.

7. Startergenerator nach Anspruch 6, **dadurch gekennzeichnet, dass** der Rotor (4) an dem Nabenteil (4b) an der Kurbelwelle (3) angebracht ist, der Stator (9) an einem Trägergehäuse (6a) angebracht ist, das an dem Gehäuse der Kraftmaschine befestigt ist, und ein Stirnträger (6b) mit dem Hall-Element (29) darauf weiter am Trägergehäuse (6a) angebracht ist.

8. Startergenerator nach den Ansprüchen 6 oder 7, **dadurch gekennzeichnet, dass** der zu detektierende Magnet (26) auf dem Nabenteil (4b) durch einen aus einem nichtmagnetischen Material hergestellten Abstandshalter (25) angeordnet ist.

9. Startergenerator nach einem der Ansprüche 1 bis 5, **dadurch gekennzeichnet, dass** die Feldspule (11), die um einen Spulenkörper (12) gewickelt ist, an einer Stirnfläche des Stators (9) vorgesehen ist, der Stator (9) mit einem Durchführungsloch (18a) versehen ist, das in seiner axialen Richtung gebohrt ist, ein isolierender Halter (19) mit einem Anschlusselement (20), das dadurch eingesetzt ist, in das Durchführungsloch (18a) eingesetzt ist, wodurch das Anschlusselement (20) an seinem einen Ende mit der Feldspule (11) elektrisch verbunden ist und an seinem anderen Ende mit einem elektrischen Draht auch elektrisch verbunden ist, um elektrische Energie zur Feldspule (11) zuzuführen.

10. Startergenerator nach Anspruch 9, **dadurch gekennzeichnet, dass** ein passendes Anschlusselement, das mit einem elektrischen Draht zur Zufuhr von elektrischer Energie zur Feldspule (11) verbunden ist, mit dem Anschlusselement (20) im Durchführungsloch (18a) gekoppelt ist.

11. Startergenerator nach einem der Ansprüche 1 bis 5, **dadurch gekennzeichnet, dass** der Stator (9) mit einem Befestigungselement-Einsatzloch (17) versehen ist, das sich in der axialen Richtung davon erstreckt, und die Feldspule (11), die an einem Ende des Stators (9) vorgesehen ist, und das Trägergehäuse (6a), das an dem anderen Ende des Stators (9) vorgesehen ist, miteinander gekoppelt sind, um den Stator mittels eines Befestigungselements (10), das in das Befestigungselement-Einsatzloch (17) eingesetzt ist, in Sandwichbauweise anzuordnen.

12. Startergenerator nach Anspruch 11, **dadurch gekennzeichnet, dass** die Feldspule (11), die um einen Spulenkörper (12) gewickelt ist, an einer Stirnfläche des Stators (9) vorgesehen ist, und ein Schraubenmutterteil (16), der auf dem Spulenkörper (12) vorgesehen ist, mit einem Befestigungselement (10) verschraubt ist, das in das Befestigungselement-Einsatzloch (17) von der Außenseite des Trägergehäuses (6a) eingesetzt ist.

13. Startergenerator nach einem der Ansprüche 1 bis 12, **dadurch gekennzeichnet, dass** der Startergenerator angepasst ist, um in einem Kraftrad verwendet zu werden, das möglicherweise durch einen Kick gestartet wird.

14. Startergenerator nach einem der Ansprüche 1 bis 12, **dadurch gekennzeichnet, dass** der Startergenerator angepasst ist, um mit einer Allzweckkraftmaschine gekoppelt zu sein, die möglicherweise unter Verwendung eines Seils gestartet wird.

## Revendications

1. Générateur démarreur comportant un stator (9) autour duquel un enroulement d'induit (7) est enroulé et un rotor (4) directement couplé à un vilebrequin (3) d'un moteur et ménagé sur le côté extérieur ou le côté intérieur du stator (9) de manière à être rotatif par rapport au stator (9), le générateur démarreur étant agencé pour fonctionner sélectivement comme un moteur lors du démarrage du moteur et aussi comme un générateur lorsque le moteur a été démarré, le générateur démarreur étant **caractérisé en ce qu'**il comprend :
un dispositif de champ disposé sur le rotor (4), comprenant plusieurs aimants permanents (5a) magnétisés de la même manière en termes de polarité et plusieurs aimants contrôlables (5b) réalisés en un matériau magnétique, les aimants contrôlables (5b) étant disposés respectivement entre les aimants permanents (5a);
un bobinage de champ (11) formant un circuit magnétique fermé à travers les aimants contrôlables (5b); et
des moyens de réglage du flux magnétique effectif (41a) pour régler le flux de courant électrique circulant à travers le bobinage de champ (11) pour modifier le flux magnétique généré par le bobinage de champ (11), au moyen duquel le flux magnétique effectif généré entre le rotor (4) et le stator (9) est réglé selon la fonction désirée.

2. Générateur démarreur selon la revendication 1, **caractérisé en ce que** les moyens de réglage du flux magnétique effectif (41a) amorcent le bobinage de champ (11) de manière à augmenter le flux magnétique effectif lors du démarrage du moteur et désamorcent le bobinage de champ (11) lorsque le moteur a été démarré.

3. Générateur démarreur selon la revendication 1, **caractérisé en ce que** les moyens de réglage du flux magnétique effectif (41a) amorcent le bobinage de champ (11) de façon à augmenter le flux magnétique effectif lors du démarrage du moteur et amorcent de la même manière le bobinage de champ (11) de façon à diminuer le flux magnétique effectif lorsque le moteur a été démarré.

4. Générateur démarreur selon la revendication 1, **caractérisé en ce que** les moyens de réglage du flux magnétique effectif (41a) amorcent le bobinage de champ (11) de façon à augmenter le flux magnétique effectif lors du démarrage du moteur et amorcent de la même manière le bobinage de champ (11) de façon à régler le flux magnétique effectif selon la vitesse de rotation du moteur lorsque le moteur a été démarré.

5. Générateur démarreur selon la revendication 4, **caractérisé en ce que**, lorsque le moteur a été démarré, les moyens de réglage du flux magnétique effectif (41a) règlent la quantité de courant électrique fourni au bobinage de champ (11) pour que, comme la vitesse de révolution du moteur augmente, la quantité de flux magnétique effectif diminue.

6. Générateur démarreur selon l'une quelconque des revendications 1 à 5, **caractérisé en ce que** le rotor (4) est agencé pour être rotatif à l'extérieur du stator (9), une partie de moyeu (4b) formée dans une partie du rotor (4) est insérée dans une partie centrale du stator (9) sur l'axe de rotation, la partie de moyeu (4b) est pourvue d'un aimant (26) à détecter, et un élément à effet Hall (29) est ménagé sur le stator (9) à un endroit en face de l'aimant (26) à détecter.

7. Générateur démarreur selon la revendication 6, **caractérisé en ce que** le rotor (4) est lié au vilebrequin (3) par la partie de moyeu (4b), le stator (9) est attaché à un boîtier support (6a) fixé au boîtier dû moteur et un support d'extrémité (6b) comportant l'élément à effet Hall (29) est en outre attaché au boîtier support (6a).

8. Générateur démarreur selon la revendication 6 ou 7, **caractérisé en ce que** l'aimant (26) à détecter est disposé sur la partie de moyeu (4b) à travers une entretoise (25) réalisée en un matériau non magnétique.

9. Générateur démarreur selon l'une quelconque des revendications 1 à 5, **caractérisé en ce que** le bobinage de champ (11) enroulé autour d'une bobine d'enroulement (12) est ménagé à une face d'extrémité du stator (9), le stator (9) est pourvu d'un trou de passage d'alimentation (18a) percé dans sa direction axiale, un support isolant (19) comportant une borne (20) insérée par là, est inséré dans le trou de passage d'alimentation (18a), par lequel la borne (20) est électriquement connectée par une de ses extrémités au bobinage de champ (11) et également électriquement connectée par son autre extrémité à un fil électrique pour alimenter le bobinage de champ (11) en énergie électrique.

10. Générateur démarreur selon la revendication 9, **caractérisé en ce qu'**une borne de couplage relié à un fil électrique pour alimenter le bobinage de champ (11) en énergie électrique est couplée à la borne (20) à l'intérieur du trou de passage d'alimentation (18a).

11. Générateur démarreur selon l'une quelconque des revendications 1 à 5, **caractérisé en ce que** le stator (9) est pourvu d'un trou d'insertion (17) d'un élément de fixation s'étendant dans sa direction axiale, et le bobinage de champ (11) ménagé à une extrémité du stator (9) et le boîtier de support (6a) ménagé à l'autre extrémité du stator (9) sont couplés l'un à l'autre afin d'enserrer le stator au moyen d'un élément de fixation (10) qui est inséré dans le trou d'insertion (17) de l'élément de fixation.

12. Générateur démarreur selon la revendication 11, **caractérisé en ce que** le bobinage de champ (11) enroulé autour de la bobine d'enroulement (12) est ménagé à une face d'extrémité du stator (9) et une partie d'écrou (16) ménagée sur la bobine d'enroulement (12) est vissée avec un élément de fixation (10) qui est inséré dans le trou d'insertion (17) de l'élément de fixation à partir de l'extérieur du boîtier support (6a).

13. Générateur démarreur selon l'une quelconque des revendications 1 à 12, **caractérisé en ce que** le générateur démarreur est agencé pour être utilisé sur une motocyclette qui peut être démarrée par un kick.

14. Générateur démarreur selon l'une quelconque des revendications 1 à 12, **caractérisé en ce que** le générateur démarreur est agencé pour être couplé à tout type de moteur qui peut être démarré en utilisant une ficelle.
